# EUROPÄISCHE PATENTSCHRIFT

(11) **EP 4 186 576 B1**
(45) Veröffentlichungstag und Bekanntmachung des Hinweises auf die Patenterteilung: **25.06.2025**
(21) Anmeldenummer: 22206636.7
(22) Anmeldetag: 10.11.2022
(51) Int. Cl.: B01D 15/18, B01D 15/36, B01J 47/00, G01N 30/46, G01N 30/96

(54) **IONENAUSTAUSCHERANLAGE ZUR VERWENDUNG VON IONENAUSTAUSCHPROZESSEN**
ION EXCHANGE SYSTEM FOR USE IN ION EXCHANGE PROCESSES
INSTALLATION D'ÉCHANGE D'IONS POUR L'UTILISATION DE PROCÉDÉS D'ÉCHANGE D'IONS

(30) Priorität: 25.11.2021 DE 102021130958
(43) Veröffentlichungstag der Anmeldung: 31.05.2023
(73) Patentinhaber: MionTec GmbH, 51377 Leverkusen (DE)
(72) Erfinder: Marvin, Lentes, 51377 Leverkusen (DE); Mauer, Dieter, 51377 Leverkusen (DE)
(74) Vertreter: Erbacher, Martin

(56) Entgegenhaltungen:
- EP-A1- 3 702 775
- WO-A1-2006/131286
- WO-A2-2012/078677
- CN-A- 111 249 770
- US-A1- 2006 273 013

## Beschreibung

Die vorliegende Erfindung betrifft eine Ionenaustauscheranlage zur Verwendung in Ionenaustauschprozessen, insbesondere zum Ändern der stofflichen Zusammensetzung einer Lösung, mit einer Mehrzahl fluidisch durchströmbarer Säulen, wobei jede Säule ein erstes Ein-/Ausströmende und ein zweites Ein-/Ausströmende aufweist, und mit einer Mehrzahl Medienpfade, wobei jedes Ein-/Ausströmende mit zumindest zwei Medienpfaden koppelbar ist, wobei jeder Medienpfad einen oder mehrere Zuläufe aufweist und die Medienpfade einen oder mehrere Abläufe aufweisen. Aus der WO 2006/131286 A1 ist eine Vorrichtung zur chromatographischen Trennung von Gemischen bekannt, welche eine Mehrzahl von chromatographischen Säulen aufweist, die in Reihe geschaltet sind, wobei die Säulen mit einer Mehrzahl von Medienpfaden koppelbar sind. Ähnliche Vorrichtungen sind außerdem bekannt aus den Druckschriften CN 111 249 770 A, WO 2012/078677 A2 oder EP 3 702 775 A1.

Ionenaustauschverfahren werden eingesetzt, um stoffliche Zusammensetzungen von Lösungen zu ändern. Dabei werden meist Ionen der einen Art gegen Ionen der anderen Art ausgetauscht, während die Lösung durch den Ionenaustauscher in Form einer Säule hindurchfließt. Ein typischer Ablauf ist dabei der folgende:

### Schritt 1: Regeneration

Die funktionellen Gruppen des Ionenaustauschers werden mit den Ionen der Sorte 1 beladen (z.B. H+-Ionen bei der Regeneration eines Kationenaustauschers mit einer Säure). Das typischerweise über die Säule geleitete Regeneriermittelvolumen beträgt etwa das 1 bis 2-fache des Ionenaustauschervolumens (= 1 bis 2 Bettvolumen, BV).

### Schritt 2: Verdrängung

Typischerweise wird die Regenerierlösung mit entsalztem Wasser (VE-Wasser) verdrängt. Dabei läuft aus der Säule zuerst noch das zum Ende von Schritt 1 innerhalb der Säule befindliche Volumen der Regenerierlösung ab, bis die Konzentration derselben dann schlagartig absinkt (manchmal auch "Absüßen" genannt). Die ausreichend gesunkene Produktkonzentration markiert typischerweise das Ende der Verdrängung. Der oft angewandte Durchsatz der Verdrängung liegt bei 0,3 bis 0,5 BV.

### Schritt 3: Wäsche

Das Regeneriermittel selbst darf oft nicht im später durch die Säule fließenden Produkt enthalten sein. Daher wird die Konzentration des Regeneriermittels durch die Wäsche mit meist entsalztem Wasser auf einen Wert hinuntergewaschen, der eine ausreichende Reinheit des späteren Produkts ermöglicht. Der benötige VE-Wasser-Durchsatz ist unterschiedlich und hängt von den Reinheitsanforderungen ab. Er liegt oft bei 1,5 bis 5 BV.

### Schritt 4: Beladung

Die Eduktlösung wird auf die Säule gegeben. Dabei läuft zuerst natürlich noch der bisherige Inhalt der Säule, im Wesentlichen das Waschwasser nach der Regeneration, ab (manchmal auch "Ansüßen" genannt). Man unterteilt die Beladung also typischerweise in:

### Schritt 4a: Ansüßen / Aufkonzentrieren

Dieser erste Abschnitt der Beladung mit Eduktlösung schiebt nur Wasser aus der Säule. Der Flüssigkeitsdurchsatz dieses Schrittes beträgt meist etwa 0,3 bis 0,5 BV. Während dieses Flüssigkeitsvolumens wird die Säule also am Eingang mit der Eduktlösung beladen, aber sie produziert noch kein Produkt am Ausgang.

### Schritt 4b: Produktion

Am Ende des Aufkonzentrierungsschritts steigt die Produktkonzentration recht steil an und wird in den Produktweg geschaltet. Der Durchsatz des nun folgenden Produktionsschrittes richtet sich nach der Kapazität des Ionenaustauschers und der Konzentration der zu tauschenden Ionensorte im Edukt. Bei den hier im Fokus befindlichen Kurztaktverfahren liegen typische Beladedurchsätze in der Größenordnung von 1 bis 2 BV. Sie sind also in der gleichen Größenordnung wie die Regenerations- und die Verdrängungsdurchsätze, was für die hier beschriebenen Verfahrenstypen essenziell ist.

### Schritt 4c: Absüßen / Abkonzentrierung

Gegen Ende der Beladung steigt die Konzentration der unerwünschten Ionensorte im Ablauf der Säule langsam an (Durchbruchssituation). Hier muss also die Produktion beendet werden, um die Qualität des ablaufenden Produktes nicht zu verschlechtern. In der Säule befindet sich aber noch Eduktlösung mit deutlich höherer Konzentration an der im Edukt befindlichen unerwünschten Ionensorte. Dieser Edukt-Hold-Up in der Säule (typisch wieder 0,3 bis 0,5 BV) darf nicht in das Produkt geleitet werden, soll aber auch nicht verloren gehen. Dieser Hold-Up wird bei der Abkonzentrierung daher typischerweise in das Edukt zurückgeleitet.

Alternativ wird auch oft die Möglichkeit genutzt, den Durchbruch vorwegnehmend zur richtigen Zeit im Zulauf bereits auf Verdrängungswasser umzuschalten, so dass der Anstieg der unerwünschten Ionensorte mit dem Abfall der Stoffkonzentration ca. 0,3 bis 0,5 BV nach der Umschaltung am Eingang auf Verdrängungswasser zusammenfällt. Diese beiden alternativen Möglichkeiten werden beide technisch genutzt.

Die in diesem Beispiel notwendige Trennung der Beladung in drei Unterschritte (Schritte 4a bis 4c) wird oft genauso bei der Regeneration eingesetzt. Dann wird der Schritt 1 also auch in die Teilschritte 1abis 1c aufgeteilt, je nachdem, wie das IonenaustauschVerfahren im Einzelnen gestaltet werden muss. Die Zahl der Schritte im Gesamtverfahren liegt damit häufig zwischen 4 und 10, selten weniger, oft auch mehr.

Diese beispielhafte Auflistung von mehreren Schritten nacheinander führt dazu, dass eine einzelne Säule diese Schritte zeitlich nacheinander durchlaufen muss. Parallelitäten sind nicht möglich. Wenn also nur eine Säule in der Anlage vorhanden ist, wird die Produktlösung nur zu einem kleinen Anteil der gesamten Betriebszeit der Anlage anfallen und ebenso wird nur zu einem geringen Zeitanteil Eduktlösung verbraucht. Das Puls-Pausen-Verhältnis des Verfahrens ist also deutlich < 1 und verlangt große Puffertanks.

Diese Einschränkung wird bei nur ein Harz enthaltenden Prozessen entweder durch Parallelschaltung oder wie hier erfindungsgemäß benutzt, durch Reihenschaltungen von mehreren Säulen und eine Art von Karussellfahrweise gelöst.

Es ist daher die Aufgabe der vorliegenden Erfindung, eine Ionenaustauscheranlage derart weiterzuentwickeln, dass diese eine kompaktere Bauform bei gleichzeitig erhöhter Anlagenproduktivität aufweist. Es ist ferner eine Aufgabe der Erfindung, dass die Anlage eine erhöhte Anpassbarkeit an die Variierung von Prozessparametern ermöglicht.

Die Aufgabe wird gelöst durch eine Ionenaustauscheranlage mit den Merkmalen des unabhängigen Anspruchs.

Demgemäß ist vorgesehen, dass zwischen benachbarten Säulen jeweils eine mittels vier über eine H-Verrohrung miteinander verbundenen Ventilen realisierte Kreuzung vorgesehen ist, mittels welcher eine beliebige Anzahl benachbarter Säulen in Serie betreibbar ist, wobei mittels der Kreuzung die ersten Ein-/Ausströmenden und die zweiten Ein-/Ausströmenden (3) zweier benachbarter Säulen zur Bereitstellung eines Fluidpfads beliebig untereinander koppelbar sind.

Somit betrifft die Erfindung eine neuartige Technologie für Ionenaustauschprozesse, welche Kurztakt-Karussell-Verfahren ("Merry-Go-Round" oder MGR-Verfahren) ermöglicht, die aufgrund einer Rezeptur-Ablaufsteuerung innerhalb jedes Einzel-Produktpfades und wählbaren Säulenzuordnungen auf die parallel ablaufenden Einzelrezepturen eine gegenüber Verfahren nach dem Stand der Technik (z.B. "Simulated Moving Bed", SMB) deutlich erhöhte Anpassbarkeit auf z.B. variierende Zulaufkonzentrationen sowie zusätzlich noch die in jedem Schritt variable Strömungsrichtung durch jede Säule bietet.

Die erfindungsgemäße Vorrichtung ist eine trickreiche Kombination von mehreren Säulen, wobei (wie beim SMB auch) zeitliche Parallelitäten genutzt werden können, da eine bestimmte Anzahl der verfügbaren Säulen der Beladung, eine weitere Zahl der Regeneration und ggf. auch eine weitere Gruppe der Wäsche flexibel zuordenbar sind (3 Medienpfade für Beladung, Regeneration und Wäsche z.B.).

Insbesondere vorteilhaft ist die auch nach der Inbetriebnahme der Anlage immer noch frei definierbare Aufteilung der verfügbaren Säulen auf diese Schrittgruppen und die Tatsache, dass nicht für jeden Einzelschritt auch eine körperliche Säule benötigt wird, wie es z.B. bei den SMB-Verfahren notwendig ist, welche hier als eine Möglichkeit des Stands der Technik beschrieben werden.

Darüber hinaus bietet die erfindungsgemäße Wahl der Ventilschaltungen ebenso jederzeit die Möglichkeit, für jeden Einzelschritt und auch Teilschritt die Strömungsrichtung durch die Säule - auch noch nach der Anlageninbetriebnahme - frei per Software wählen zu können. Dies ist bei den bekannten Anlagensystemen grundsätzlich nicht mehr der Fall, wie zwei Beispiele aus dem Stand der Technik zeigen.

Es kann vorgesehen sein, dass die Ionenaustauscheranlage zwischen 3 bis 5 Säulen, vorzugsweise zwischen 4 bis 5 Säulen. Aufweist (als C = 3, 4 oder 5 benannt). Dies hat den Vorteil, dass dadurch auch komplizierte Kurztaktverfahren durchgeführt werden können.

Eine vorbestimmte Anzahl der Säulen kann als Beladungssäulen vorgesehen sein (mit der Variable L benannt). Es kann vorgesehen sein, dass die Beladungssäulen so ausgebildet sind, dass diese in einer Reihenschaltung betreibbar sind. Es kann vorgesehen sein, dass die Anzahl der Beladungssäulen kleiner als die Gesamtanzahl der Säulen ist.

Eine vorbestimmte Anzahl der Säulen kann als Regenerationssäulen vorgesehen sein (mit der Variable R benannt). Dabei kann vorgesehen sein, dass die Anzahl der Regenerationssäulen kleiner oder gleich der Differenz aus der Gesamtanzahl Säulen und der Anzahl der Beladungssäulen ist.

Es kann vorgesehen sein, dass zumindest zwei Säulen als Regenerationssäulen verwendet werden. Dies weist den Vorteil auf, dass eine deutlich höhere Effizienz bei der Regeneration erzielt wird, da nacheinander eine Säule eine "Grobregenerierposition" und im nächsten Schritt eine "Feinregenerierposition" durchläuft.

Eine vorbestimmte Anzahl der Säulen kann als Wäschesäulen vorgesehen sein (mit der Variable W benannt). Dabei kann vorgesehen sein, dass die Anzahl von Wäschesäulen zwischen 1 und 2 beträgt.

Es kann vorgesehen sein, dass die Säulen logisch per Ventilschaltung (nicht körperlich, wie beim SMB) rotieren. Die Ionenaustauscheranlage kann derart angesteuert sein, dass innerhalb jedes einzelnen logischen Rotationsschrittes der Säulenfolgen mehrere Teilschritte zeitlich nacheinander stattfinden. Die Ansteuerung kann durch eine Rezeptursteuerung erfolgen. Es kann vorgesehen sein, dass eine Verwendung mehrerer Medien nacheinander während eines einzelnen Rotationsschrittes möglich ist. Die Ionenaustauscheranlage kann derart ausgebildet sein, dass jedes der mehreren Medien für jeden Pfad einmal per Einzelventil zur Verfügung gestellt werden kann.

Die Ionenaustauscheranlage bzw. die Karussellanlage kann zwischen 2 bis 3 (oder auch mehr; P benannt) durch die Anlage verlaufende Medienpfade aufweisen. Dabei kann vorgesehen sein, dass jedem Medienpfad unabhängig voneinander jedes der mehreren Medien zuführbar ist. Die Durchflussrate jedes Medienpfads kann individuell eingestellt werden. Somit können alle Medienpfade eine unterschiedliche Durchflussrate aufweisen und zeitgleich betrieben werden. Für jeden Medienpfad kann eine bestimmte Säulengruppe angewählt werden, welche der Medienpfad durchfließen soll. Für jeden Medienpfad kann ein bestimmter Ausgang von mehreren Ausgängen der Ionenaustauscheranlage angewählt werden, wobei auch innerhalb eines Rotationsschrittes zeitlich nacheinander zwischen den einzelnen Ausgängen umgeschaltet werden kann.

Die Ionenaustauscheranlage bzw. die Karussellanlage kann demnach also eine Feinstruktur von einzelnen Teilschritten (Teilrezepten) aufweisen, welche z.B. über eine Rezeptursteuerung innerhalb jedes Rotationsschrittes ablaufen. Dabei kann für jeden Pfad ein Teilrezept (also P Teilrezepte) vorgesehen sein. Der Rotationsschritt kann dann das Karussell an allen Positionen eine logische Position weiterdrehen. Es kann vorgesehen sein, dass diese Rotation nur in der Software abläuft, nicht, wie beim SMB, einem wirklichen mechanischen Weiterdrehen entspricht. Dann laufen wieder die Feinstrukturrezepte ab. Somit ist die Zahl der Säulenpositionen um z.B. 6 bis 9 (oder mehr) Verfahrensschritte durchfahren zu können, nicht mehr 6 bis 9 (oder mehr) wie beim SMB-Verfahren, sondern nur die erwähnten 3 bis 5.

Es kann vorgesehen sein, dass die zeitlichen Summen der Teilrezeptschritte innerhalb jedes Teilrezeptablaufes für jeden Pfad ähnlich oder gleich sind. Es kann vorgesehen sein, dass dabei einer der Pfade, z.B. der der Beladung, als "Master" definiert wird. Der als Master ausgewählte Pfad kann über ein Feinstrukturrezept die Auf- und Abkonzentrierung und die dazwischen ablaufende Beladung ausführen. Am Ende dieses Teilrezeptes der Beladung kann die erste Säule (voll beladene Arbeitsposition) an den Regenerationspfad übergeben, danach ein Rotationsschritt ausgeführt und die nächste Gruppe von L-Säulen beladen werden. Zu beachten ist, dass auch bei L=3 z.B. das Weiterschalten nur einen Säulenschritt durchführt. Es kann vorgesehen sein, dass durch diesen Rotationsschritt also eine einzige Säule aus der Wäsche am Ende in die Beladekette übernommen und eine einzige von der vordersten Position an die Regeneration übergeben wird, unabhängig davon, wie viele Säulen sich in der Beladekette befinden.

Wenn der Zeitbedarf für die Regeneration und Wäsche innerhalb eines Beladungs-Rotationsschritts nicht abzudecken ist, kann einfach ein dritter Pfad zugefügt (P wird dann z.B. 3) und ggf. die Zahl der Säulen C erhöht werden. Dadurch kann die Ionenaustauscheranlage so ausgelegt sein, dass diese 5 Säulen (C=5) aufweist und von diesen 5 Säulen 2 bis 3 als Beladesäulen (L=2 bis 3), 1 bis 3 als Regenerationssäulen (R=1 bis 3) und 1 bis 2 als Wäschesäulen (W=1 bis 2) vorgesehen sind. Einzige Randbedingung ist natürlich, dass L+R+W=C ist und die Feinstrukturrezepte ähnlich lange dauern. Es kann vorgesehen sein, dass die Feinstrukturrezepte der Regeneration und der Wäsche geringfügig kürzer sind als das der Beladung. Wartezeiten in den R- und W-Pfaden können durch solch ein System leicht toleriert werden. Sie sollten aus Effizienzgründen jedoch minimiert werden. Dies kann im Gegensatz zum SMB-System leicht und von jedem Verfahrenstechniker während des Einfahrens der Anlage erledigt werden. Es ist insbesondere nicht mehr notwendig, dass alle Medien während des gesamten Rotationsschrittes fließen, wie beim SMB-Verfahren nach Stand der Technik.

Der Kern der Erfindung ist also die Bereitstellung eines RI-Schemas (Verrohrungs- und Instrumentierungsschema) wobei die Ventile und die Flussregler mit einer neuartigen mehrfachen Rezeptursteuerung nach einem zielorientierten Master-Slave-Konzept gesteuert und verriegelt werden können.

Die Erfindung weist daher folgende Vorteile auf:
- vermeidet die starre Taktzeit;
- senkt die Zahl der Säulenpositionen auf typisch 4 bis 5;
- erlaubt aufgrund der geringen Säulenzahl zuverlässige diskrete Ventile;
- nutzt Teilschritte zeitlich nacheinander innerhalb eines Rotationsschrittes;
- ermöglicht eine echte mehrstufige Gegenstromregeneration;
- ermöglicht durch Reihenschaltungen auch während der Regeneration die Sparvorteile der fraktionierten Regeneration;
- benötigt keine Fraktionentanks;
- nutzt ein neuartiges Konzept von umschaltbaren Medienpfaden mit für jeden Pfad wählbaren Medieneingängen, Strömungsrichtungen und Ausgängen;
- kann somit jedes Medium über jede wählbare Säulenkombination in jeder Richtung und in jeden Ausgang fahren;
- kann sehr einfach und auch nachträglich um neue Medien erweitert werden;
- erlaubt diese Freiheit nicht nur in der Planungsphase, sondern ebenso auch noch in der Betriebsphase.

Beispielhafte Ausführungsformen der Erfindung werden anhand der nachfolgenden Figuren erläutert. Dabei zeigt:
- Fig. 1: einen beispielhaften SMB-Anlagenaufbau zur Flüssigzuckerentfärbung als Beispiel zum Stand der Technik;
- Fig. 2: einen Aufbau einer beispielhaften Entsalzungsanlage nach Stand der Technik mit vordefinierter Strömungsrichtung;
- Fig. 3: ein RI-Fließbild einer Ausführungsform der erfindungsgemäßen Ionenaustauscheranlage.

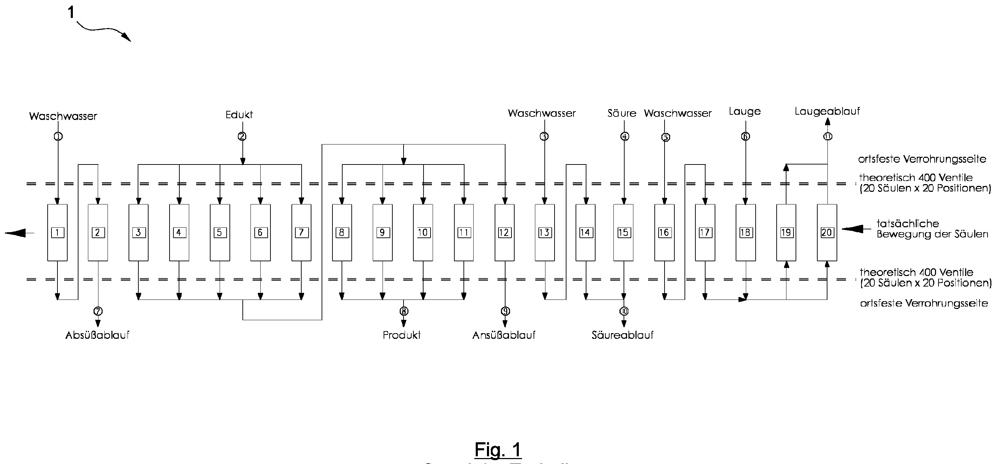

Die SMB-Technologie nach dem Stand der Technik ist in Fig. 1 am Beispiel einer Flüssigzuckerentfärbung gezeigt. Die als Karussell gebaute Gruppe der Säulen 1-20 rotiert körperlich und schrittweise zwischen der ortsfesten Verrohrung mit Schrittdauern von wenigen Minuten, sodass nach 1 bis 2 h eine Säule wieder am Startpunkt angekommen ist. Die Rotation ist nicht gleichförmig, sondern ruckweise. Die Schrittbewegung unterbricht die Flüsse also möglichst kurzzeitig. Die gestrichelten Linien können als diskrete Ventile (dann hier 800) oder - aufgrund der extrem hohen Zahl - auch als 2 Scheibenventile mit je zwei gegeneinander rotierenden gelochten Scheiben ausgeführt werden. Das SMB-Verfahren besitzt vier wesentliche Nachteile.
1. Jeder Schritt aus den oft 4 bis 12 Verfahrensschritten muss mit mindestens einer körperlichen Säulenposition ausgestattet werden, da an jeder Position genau ein Medium zugeführt wird und genau ein Ablauf aufgesammelt wird. SMB-Anlagen enthalten daher typisch mehr als 8 Säulen (im Beispiel 20). Zu bedenken ist, dass auch bei großen Anlagen die Säulen mit wenigen m³ Harz gefüllt, mechanisch bewegt werden. Ideen, dies mit Hilfe von 3- anstatt 2-Scheiben-Ventilen zu umgehen, haben sich nicht durchgesetzt, da die Scheibenventile dann noch mehr Dichtflächen enthalten müssen und noch anfälliger wurden.
2. Es wird oft herausgestellt, dass es sinnvoll ist, die Beladung z.B. auf mehrere hintereinander geschaltete Säulen aufzuteilen. Dieser Gedanke ist ohne Zweifel völlig richtig, da er eine Durchbeladung jeder einzelnen Säule an der ersten Position der Beladekette (der Arbeitsposition) ermöglicht, ohne, dass am Ende der in Beladung befindlichen Säulenkette (nach der Polisher-Position) bereits erkennbare Konzentrationen der unerwünschten Ionensorte auftreten. Im gezeigten Beispiel sind innerhalb eines Schrittes 2, 4 oder 5 Säulen in Serien gruppiert. Diese Gestaltung erhöht jedoch bei jeder Reihenschaltung innerhalb des Prozesses die Säulenanzahl noch einmal, so dass die genannten hohen Säulenzahlen von 8 bis 30 resultieren, auch wenn nur beispielsweise 3 bis 4 Medien benutzt werden (im Beispiel 4).
3. Da das Karussell mit den 8 bis 30 Säulen als geschlossene Einheit schrittweise weitergedreht wird, ist die Taktzeit für alle Schritte exakt identisch und Variationen der Beladelänge, weil z.B. die Zulaufkonzentration schwankt, sind nicht einfach möglich. Sie müssen durch Anpassungen des Flusses durch die Säule kompensiert werden, was leider oft Qualitätsschwankungen nach sich zieht.
4. Die mechanische Konstruktion der Verrohrung benötigt prinzipiell für jede Säule und zusätzlich für alle Verrohrungspositionen ein Eingangs- und ein Ausgangsventil. Bei z.B. 4 Säulen bedeutet das 4 Säulen x 4 Verrohrungspositionen x 2 (Eingang + Ausgang) = 32 Ventile. Im Beispiel mit 20 Säulen liegt die benötigte Ventilanzahl bereits bei 20 x 20 x 2 = 800. Diese ausgesprochen große Zahl wird dann oftmals durch zwei sogenannte Scheibenventile ersetzt. Diese bestehen aus vier Scheiben mit Dichtflächen dazwischen, zwei stationären Scheiben außen, an denen die Verrohrungen der Ein- und der Ausgänge angeschlossen sind, und zwei rotierenden Scheiben innen im Rotor, an denen die mit rotierenden Säulenein- und -ausgänge angeschlossen sind. Diese Doppel-Scheibenventile sparen zwar diskrete Ventile ein, haben sich aber als eine der prinzipiellen Schwachstellen der SMB-Technologie herausgestellt. Die Anforderungen an die Dichtigkeit lassen sich nur unter Schwierigkeiten dauerhaft und ausreichend erfüllen, manchmal gar nicht.

Die genannten Schwierigkeiten treffen umso mehr zu, wie sich die Beladedauer und die Regenerierdauer annähern. In den Fällen, bei denen die Beladung zeitlich doch noch deutlich länger als die Regeneration läuft, hat sich als einfachere Alternative zum SMB-Verfahren das Merry-Go-Round-Verfahren (MGR) durchgesetzt. Es besteht aus 2 bis maximal 4 Säulen, wobei L=C-1 Säulen der Beladung und genau eine Säule der Regeneration zugeordnet ist (R=1). Da die Dauer der Beladung deutlich länger ist als die Regeneration, wird diese eine Säule mit allen Verdrängungs-, Regenerier- und Waschschritten nacheinander durchflossen und steht nach der Regeneration und Wäsche wieder zur Eingliederung an das Ende der Beladekette als neue Polishersäule zur Verfügung, deutlich bevor die nächste Arbeitssäule (die erste in der Beladekette) wieder vollbeladen zur Regeneration ansteht.

Da hier typisch nur 2 bis 3 Säulen eingesetzt werden, ist die Zahl der benötigten Ventile so gering, dass sie in Form von betriebssicheren diskreten Ventilen aufgebaut werden.

Man kann also die SMB-Technologie als die Spezialisierung des MGR-Verfahrens für sehr kurze Beladedauern in der ähnlichen Größenordnung wie die Regenerationsdauer ansehen, bei dem als Konsequenz sehr starre Prozessabläufe, eine gemeinsame Taktzeit für alle Einzelschritte, eine hohe Anzahl von Einzelsäulen und eine sehr komplizierte und anfällige Ventiltechnik notwendig wurden.

Das Beispiel in Fig. 1 zeigt auch eindrucksvoll, dass für jeden Schritt die Strömungsrichtung vorgewählt und ohne Anlagenumbau nicht mehr veränderbar ist (im Beispiel fließen die meisten Medien im Abstrom durch die Säulen). Dies führt zu einer Einschränkung der Flexibilität, da die Nutzung von Gegenstromverfahren oft eine sehr trickreiche Umschaltung von Strömungsrichtungen innerhalb von einzelnen Schritten und auch noch nach der Inbetriebnahme während der betrieblichen Verfahrensoptimierung notwendig macht. Dies gilt insbesondere für die Lösungen mit hoher Dichte und die niedrigen Durchflussgeschwindigkeiten, wie sie bei Kurztaktverfahren üblich sind.

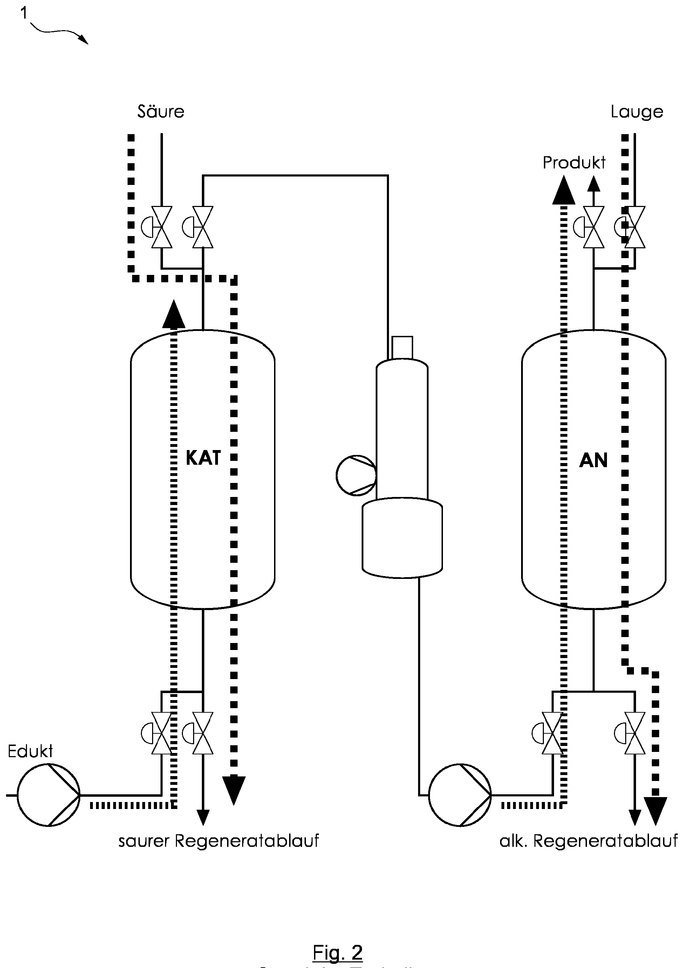

In der Fig. 2 ist am einfachen Beispiel einer Ionenaustauscher-Entsalzungsanlage gezeigt, wie nach dem Stand der Technik für die verschiedenen Medien durch das Design bereits die Strömungsrichtungen durch die Säulen festgelegt ist.

Prinzipiell sind natürlich alle Möglichkeiten der Richtungswahl realisierbar. Nach Ende der Planungsphase ist dies jedoch grundsätzlich nur mit extremem Aufwand möglich, so dass Wünsche nach einer Änderung der Strömungsrichtungen in der Praxis fast nur durch einen Anlagenneubau erfüllbar sind. Bei allen Ionenaustauscher-Kurztaktverfahren spielen die Regeneriermittelkosten eine sehr wichtige Rolle. Es ist daher wichtig, diese zu minimieren. Als Stand der Technik bietet sich hier die Methode der fraktionierten Regeneration an. Hierzu werden ein oder mehrere Fraktionentanks zum Zwischenspeichern von Regeneratabläufen verwendet. Im einfachsten Fall von einem Tank wird die zweite Hälfte des Regeneratablaufs (mit noch bedeutenden Anteilen unverbrauchtem Regeneriermittel) bei der nächsten Regeneration als erste Fraktion über die Säule gefahren und nur während der zweiten Hälfte der Regeneration wird frische Regeneriermittellösung verwendet. 1 Tank kann also den Regeneriermittelverbrauch fast halbieren. Mit mehreren Tanks der Anzahl F kann also der Regeneriermittelverbrauch theoretisch auf das 1/F-fache verringert werden. Aufgrund der abgeschwächten Regenerierwirkung der rezyklierten Fraktionen wird dieser Ersparnisfaktor normalerweise nicht erreicht. Eine Grenze dieser Methode sind die Kosten und der Platzbedarf für die zusätzlichen Tanks. Darüber hinaus gibt es den kleinen Nachteil, dass der Zulauf in einen Regeneratfraktioniertank anfangs weniger regenerierend wirkt als später. Das wird jedoch in dem Fraktionentank vermischt, so dass nur eine durchschnittliche Regenerierwirkung in der rezyklierten Fraktion erreicht wird. Die Möglichkeiten einer im Gegenstrom mit permanent steigender Restsäurekonzentration optimal betriebenen Regeneration können nur mit einer hohen Zahl von Fraktionentanks genutzt werden.

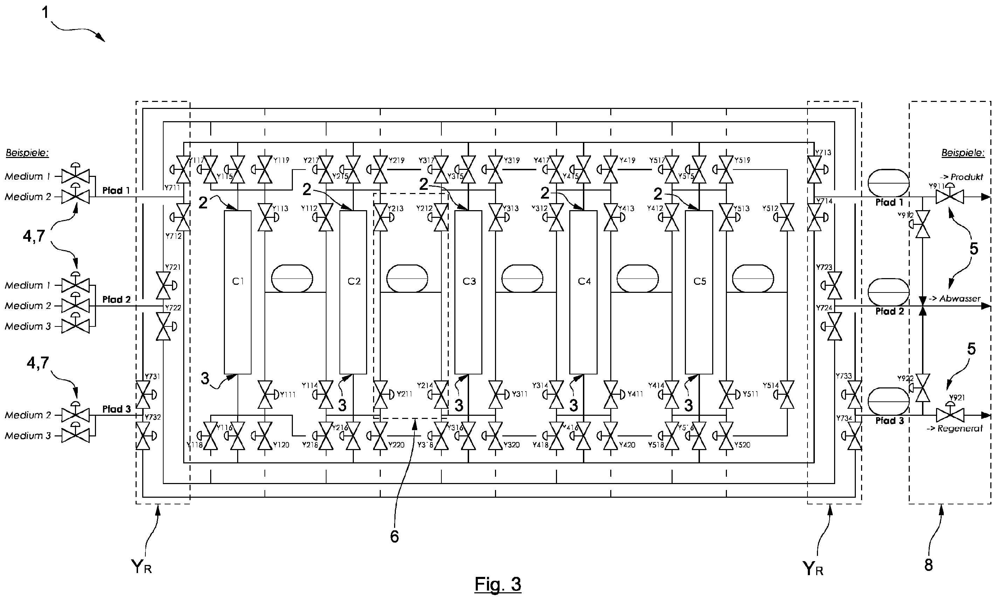

Fig. 3 zeigt ein RI-Fließbild einer Ausführungsform der erfindungsgemäßen Ionenaustauscheranlage. Die Ionenaustauscheranlage 1 weist eine Mehrzahl fluidisch durchströmbarer Säulen C auf, wobei jede Säule an ihrer Ober- und Unterseite ein erstes Ein-/Ausströmende 2 und ein zweites Ein-/Ausströmende 3 aufweist. Ferner vorgesehen ist eine Mehrzahl Medienpfade P, wobei jedes Ein-/Ausströmende 2, 3 mit jedem der Medienpfade P über jeweils dazu vorgesehene Ventile Y_{NNN} koppelbar ist. Jeder Medienpfad P weist einen separaten Zulauf 4 und einen separaten Ablauf auf. Jeder der Zuläufe 4 der Medienpfade P weist eine Eingangsumschaltung 7 auf, so dass in jeden Medienpfad P eine Mehrzahl unterschiedlicher Medien separat oder in einem Mischverhältnis eingespeist werden kann. Im gezeigten Beispiel können über den ersten Mediumpfad P1 Medium 1 und Medium 2 eingespeist werden, über den zweiten Mediumpfad P2 Medium 1, Medium 2 und Medium 3 und über den dritten Mediumpfad Medium 2 und Medium 3. Zwischen benachbarten Säulen C ist jeweils eine mittels vier über eine H-Verrohrung miteinander verbundenen Ventilen Yx11, Yx12, Yx13, Yx14 realisierte Kreuzung 6 vorgesehen, mittels welcher eine beliebige Anzahl benachbarter Säulen C in Serie betreibbar sind. Die ersten Ein-/Ausströmenden 2 und die zweiten Ein-/Ausströmenden 3 sind jeweils über separate Rohrverbindungen mit jedem der Medienpfade P verbunden und jeweils über separate Ventile Yx15, Yx16, Yx17, Yx18, Yx19, Yx20 mit diesen koppelbar. Mittels der Kreuzung 6 sind die ersten Ein-/Ausströmenden 2 und die zweiten Ein-/Ausströmenden 3 zweier benachbarter Säulen Ci und Ci+1 zur Bereitstellung eines Fluidpfads beliebig untereinander koppelbar, sodass beispielsweise das erste Ein-/Ausströmende 2 einer ersten Säule C1 mit dem ersten Ein-/Ausströmende 2 oder dem zweiten Ein-/Ausströmende 3 einer zweiten Säule C2 koppelbar ist, oder sogar mit dem zweiten Ein-/Ausströmende 3 der ersten Säule C1. Gleichermaßen kann beispielsweise das zweite Ein-/Ausströmende 3 einer ersten Säule C1 mit dem ersten Ein-/Ausströmende 2 oder dem zweiten Ein-/Ausströmende 3 einer zweiten Säule C2 koppelbar sein. Die Ionenaustauscheranlage kann eine Verriegelungsschaltung aufweisen, welche verhindert, dass jede der Mehrzahl Säulen C von mehr als einem Pfad P gleichzeitig genutzt wird. Gleichzeitigt kann die Ionenaustauscheranlage 1 ferner derart angesteuert sein, dass bei in Serie betriebenen Säulen C die dazwischen befindliche Kreuzung 6 nur von jeweils einem Medienpfad P gleichzeitig nutzbar ist. Jeder der Medienpfade kann eine eigene Flusskontrolle aufweisen, so dass alle Medienpfade P zeitlich parallel betrieben werden können. Die Ventile Y_{NNN} sind jeweils als diskrete 2/2-Ventile ausgebildet. Jeder der Medienpfade P ist in zwei unterschiedlichen Richtungen betreibbar, so dass jedes Medium im Auf- oder im Abstrom durch die Säulen C führbar ist. Dazu grenzen an jeden Zulauf 4 und diesem nachgelagert sowie an jeden Ablauf 4 und diesem vorgelagert in entgegengesetzten Richtungen des jeweiligen Medienpfads P jeweils zwei Richtungsventile Y_{R} an, über welche das jeweilige Medium in unterschiedlichen Strömungsrichtungen über den Medienpfad P führbar ist. Der Durchfluss in jedem der Medienpfade (P) ist durch eine Durchflussregelung individuell einstellbar. Zwischen den Abläufen 5 ist ferner eine Ablaufkreuzung 8 vorgesehen, über welche die geführten Medien zwischen den Abläufen 5 zumindest teilweise transferierbar sind. Wie gezeigt, weisen der Ablauf Produkt und der Ablauf Regenerat jeweils entsprechende Ventile Y9x1, Y9x2 usw. auf, um das ankommende Medium zum jeweils anderen Ablauf Produkt/Regenerat oder zum Ablauf Abwasser umzuleiten.

Die Ionenaustauscheranlage 1 weist die durchaus als maximal bzw. zumindest sehr hochwertig angesehene Kombination aus 5 Säulen (C=5) und 3 Mediumpfaden (P=3) auf, mit der sich alle typischen verfahrenstechnischen Anforderungen von Kurztaktprozessen realisieren lassen, ohne dabei 8 bis 30 Säulen verwenden zu müssen. Zu bedenken ist, dass kein Scheibenventil mit zig- Positionen, sondern diskrete Ventile Y_{NNN} verwendet werden, welche alle in Fig. 3 eingezeichnet sind. Diese hohe Ventilanzahl ist jedoch nur scheinbar aufwändig. In der Darstellung wird deutlich, dass die Kreuzungen 6 (Ventile Yx11, Yx12, Yx13, Yx14) für jeden der Mediumpfade P gleichermaßen genutzt werden können, da eine Säule C immer nur jeweils von einem Pfad P gleichzeitig genutzt werden kann. Sollten von einem Pfad P zwei benachbarte Säulen C in Serie benötigt werden, ist die Kreuzung 6 dazwischen auch niemals von einem anderen Pfad P benutzbar. Daher gibt es je Position bzw. zwischen den einzelnen Säulen C jeweils nur eine einzige Kreuzung 6, was die Zahl der Ventile Y nochmals deutlich reduziert.

Die drei gekennzeichneten Mediumpfade P besitzen jeweils eine eigene Flusskontrolle, so dass sie zeitlich parallel betrieben werden können. Eine Verriegelungsschaltung in der Software verhindert, dass Säulen C von mehr als einem Pfad P genutzt werden. Dabei kann die Ansteuerung so ausgelegt sein, aber nicht notwendigerweise, dass die untergeordneten Pfade Vorrang haben (die Wäsche in Pfad P3 hat Vorrang vor der Regeneration in Pfad P2 und diese hat Vorrang vor der Beladung in Pfad P1). Die Ansteuerung kann selbstverständlich auch eine andere Reihenfolge hinsichtlich des Vorrangs der einzelnen Pfade P vorsehen.

Jeder Pfad besitzt eine Eingangsumschaltung 7, so dass jedes angeschlossene Medium 1-2 oder 1-3 im Teilrezept des jeweiligen Pfades P verwendet werden kann. Hier wird deutlich, dass nur ein einziges Ventil zugefügt werden müsste, um einem Pfad P ein neues Medium anzubieten. Dies ließe sich sogar noch leicht nach der Inbetriebnahme der Ionenaustauscheranlage 1 vornehmen, wenn dies notwendig werden sollte.

Die Gruppe von 4 Richtungsventilen je Pfad (Y7x1, Y7x2, Y7x3, Y7x4) erlaubt die Führung des jeweiligen Mediums im Auf- oder im Abstrom durch die Säulen. Hierfür ist nur per Software eine Angabe im Teilrezept, keine Umverrohrung nötig. Damit besitzt die erfindungsgemäße Anlage genau die oben angesprochenen vielseitigen Eigenschaften, welche gegenüber dem SMB-Verfahren vorteilhaft und neuartig sind.

Im Weiteren wird eine beispielhafte Aufteilung der 5 Säulen mit 2 Beladungssäulen (L=2), 2 Regeneriersäulen (R=2) und einer Waschsäule (W=1) beschrieben. Diese beispielhafte Konfiguration ist weder als der eigentliche erfindungsgemäße Inhalt, noch als Einschränkung zu sehen, sondern nur ein mögliches Beispiel, welches die erfindungsgemäße Arbeitsweise verdeutlichen soll.

Die folgende Tabelle 1 zeigt ein Beispiel für ein Beladeteilrezept, welches nacheinander auf allen denkbaren 5 Säulensequenzen mit 2 Säulen in Serie ausgeführt wird. Es ist so gestaltet, dass es als Master-Rezept die Kontrolle der Gesamtanlage übernimmt und die Regenerations-Teilrezepte zum richtigen Zeitpunkt anstößt (letzte Spalte). Dieses Teilrezept enthält bereits auch die An- und Absüßvorgänge.

**Tab. 1 Beispielhaftes Belade-Teilrezept**

| Eingang | Richtung | Säulen | Ausgang | Fluss | Ende wenn | Referenz | max.Durchs. | dann zur Reg. |
|---|---|---|---|---|---|---|---|---|
| Edukt | Aufstrom | 1->2 | AW | 2 BV/h | LF3 > | 2000 µS/cm | 0,5 | |
| Edukt | Aufstrom | 1->2 | Produkt | 2 BV/h | nach max.Durchs. | | 1,5 | |
| Wasser | Aufstrom | 1->2 | Produkt | 2 BV/h | nach max.Durchs. | | 0,5 | S5->S1 |
| Edukt | Aufstrom | 2->3 | AW | 2 BV/h | LF4> | 2000 µS/cm | 0,5 | |
| Edukt | Aufstrom | 2->3 | Produkt | 2 BV/h | nach max.Durchs. | | 1,5 | |
| Wasser | Aufstrom | 2->3 | Produkt | 2 BV/h | nach max.Durchs. | | 0,5 | S1->S2 |
| Edukt | Aufstrom | 3->4 | AW | 2 BV/h | LF5 > | 2000 µS/cm | 0,5 | |
| Edukt | Aufstrom | 3->4 | Produkt | 2 BV/h | nach max.Durchs. | | 1,5 | |
| Wasser | Aufstrom | 3->4 | Produkt | 2 BV/h | nach max.Durchs. | | 0,5 | S2->S3 |
| Edukt | Aufstrom | 4->5 | AW | 2 BV/h | LF1 > | 2000 µS/cm | 0,5 | |
| Edukt | Aufstrom | 4->5 | Produkt | 2 BV/h | nach max.Durchs. | | 1,5 | |
| Wasser | Aufstrom | 4->5 | Produkt | 2 BV/h | nach max.Durchs. | | 0,5 | S3->S4 |
| Edukt | Aufstrom | 5->1 | AW | 2 BV/h | LF2 > | 2000 µS/cm | 0,5 | |
| Edukt | Aufstrom | 5->1 | Produkt | 2 BV/h | nach max.Durchs. | | 1,5 | |
| Wasser | Aufstrom | 5->1 | Produkt | 2 BV/h | nach max.Durchs. | | 0,5 | S4->S5 |

| | | | | | | | | |
|---|---|---|---|---|---|---|---|---|
| Trotation 1,25 h | | | | | | | | |

Nach jedem dritten Teilrezeptschritt erfolgt eine Übergabe an die Regeneration und ein logischer Rotationsschritt. Bei 5 Säulen (C=5) besteht das Beladerezept also aus 15 Schritten, welche zeitlich nacheinander auf 5 Rotationspositionen ablaufen. Das ist deutlich weniger als beim SMB nach Stand der Technik.

Die Tabelle 2 zeigt das Teilrezept für eine typische Regeneration, welche dann parallel zur Beladung abläuft, da für die Regeneration ein eigener Medienpfad mit Medienwahl, Flussregelung und Ausgangswahl zur Verfügung steht. Die gesamte Dauer dieses Teilrezeptes entspricht der Dauer von 3 Schritten im Beladerezept:

**Tab. 2 Beispielhaftes Regenerier-Teilrezept**

| Eingang | Richtung | Säulen | Ausgang | Fluss | Ende wenn | Referenz | max.Durchs. | dann zur W. |
|---|---|---|---|---|---|---|---|---|
| HCl | Abstrom | S(i)->S(i+1) | Abwass. | 1,25 BV/h | LF > | 2000 µS/cm | 0,5 | |
| HCl | Abstrom | S(i)->S(i+1) | Regen. | 1,25 BV/h | nach max.Durchs. | | 0,5 | |
| Wasser | Abstrom | S(i)->S(i+1) | Regen. | 1,25 BV/h | nach max.Durchs. | | 0,5 | S(i) |

| | | | | | | | | |
|---|---|---|---|---|---|---|---|---|
| Trotation 1,20 h | | | | | | | | |

Wenn z.B. S5->S1 an die Regenerierrezeptur übergeben wird, bedeutet dies, dass diese dann sofort mit S(i)->S(i+1) = S5->S1 startet; i ist also in dem Moment 5 usw.

Welche Säulen C von diesem Regenerierrezept belegt werden sollen, wird auf diese Weise durch den "Master", das Beladerezept vorgegeben, da dieses die aktuelle Verwendung der einzelnen Säulen C kennt.

Sollte die Wäsche aus Zeitgründen nicht mehr in das Regenerierrezept hineinpassen, wird eine fünfte Säule C5 und ein Waschrezept zugefügt, welches maximal nochmals die Zeit des Regenerierrezeptes zur Verfügung hat.

Dieses Waschrezept, in Tabelle 3 gezeigt, welches dann parallel zur Beladung und zu Regeneration abläuft (da auch hierfür ein eigener Medienpfad mit ggf. Medienwahl, Flussregelung und Ausgangswahl zur Verfügung steht) wird zum Ende des Regenerierrezeptes angestoßen und die zu waschende Säule C (oder Säulensequenz) wird vom Regenerierrezept ebenso an das Waschrezept übergeben. Es ist die im letzten Regenerierschritt vorne stehende Säule C. Wenn die Regeneration z.B. auf S₅->S1 gelaufen ist, wird danach S5 gewaschen.

**Tab. 3 Beispielhaftes Wasch-Teilrezept**

| Eingang | Richtung | Säulen | Ausgang | Fluss | Ende wenn | Referenz | max.Durchs. |
|---|---|---|---|---|---|---|---|
| Wasser | Abstrom | S(i) | Abwass. | 2,50 BV/h | LF < | 1000 µS/cm | 3 |

| | | | | | | | |
|---|---|---|---|---|---|---|---|
| Trotation 1,20 h | | | | | | | |

Nachdem eine Säule C fertig gewaschen ist, wird sie als unbelegt gekennzeichnet und kann von der Beladungssteuerung sofort als neue letzte Säule C (Polisherposition) in die Belade-Säulenkette übernommen werden.

Um das Beispiel zu komplettieren, ist in der folgenden Tabelle 4 die Benutzung der Säulen gezeigt.

**Tab. 4 Beispielhafte Benutzung der Säulen im Überblick**

| ist in B | ist in R | ist in W |
|---|---|---|
| S1->S2 | S4->S5 | S3 |
| S1->S2 | S4->S5 | S3 |
| S1->S2 | S4->S5 | S3 |
| S2->S3 | S5->S1 | S4 |
| S2->S3 | S5->S1 | S4 |
| S2->S3 | S5->S1 | S4 |
| S3->S4 | S1->S2 | S5 |
| S3->S4 | S1->S2 | S5 |
| S3->S4 | S1->S2 | S5 |
| S4->S5 | S2->S3 | S1 |
| S4->S5 | S2->S3 | S1 |
| S4->S5 | S2->S3 | S1 |
| S5->S1 | S3->S4 | S2 |
| S5->S1 | S3->S4 | S2 |
| S5->S1 | S3->S4 | S2 |

Die grauen Felder, das heißt die ersten drei Zeilen in Spalte 2 und die ersten 6 Zeilen in Spalte 3, werden bei der Anfahrt des Prozesses nicht genutzt, werden aber im rollierenden Betrieb mit ablaufen. Es ist erkennbar, wie das Beladerezept die Masterfunktion wahrnimmt, während das Regenerierrezept immer nur 3 Zeilen lang abläuft und dann mit einer neuen Säulenkombination neu gestartet wird. Gleiches gilt für die Wäsche. Ebenso ist erkennbar, dass keine Konflikte bzgl. der Säulenbelegung im Verfahren auftreten. Zusammenfassend kann an diesem Beispiel festgehalten werden, dass für insgesamt 7 Prozessschritte trotzdem nur 5 Säulen notwendig sind. Dies ist zwar vereinfacht, verdeutlicht aber den Kern der Erfindung. Ebenso ist erkennbar, dass prinzipiell in jedem Teilrezeptschritt die Strömungsrichtung verändert werden könnte, was nur eine geringfügig andere Ventilschaltung verursacht. Ebenso ist erkennbar, dass jeder Teilrezeptschritt eine eigene Angabe für den Fluss und den maximalen Durchsatz hat, dass also innerhalb der Teilrezepte sogar unterschiedliche Flüsse genutzt werden können.

Die Rotationszeit T_{Rotation} ist ebenso angegeben. Die beiden Regenerier- und Wäsche-Rezepturen laufen maximal 1,2 h, während die Beladung mit 1,25 h ein bisschen länger gestaltet ist. Wenn die Regenerier-Rezeptur oder die Wäsche-Rezeptur noch etwas kürzer laufen, da z.B. die Verdrängungen schneller sind als geschätzt, wird deren Teilrezeptdauer also noch etwas kürzer als 1,2 h ausfallen und die gewaschene Säule steht am Ende etwas früher als benötigt zur Verfügung. Dies vermeidet die Starrheit des SMB-Prozesses wirkungsvoll. Sollte es andersherum sein und eine für die Beladekette benötigte Säule C steht noch nicht fertig gewaschen zur Verfügung, wird die Beladerezeptur warten, wofür die Software-Verriegelung sorgt.

Die in der vorstehenden Beschreibung, in den Figuren sowie in den Ansprüchen offenbarten Merkmale der Erfindung können sowohl einzeln als auch in beliebiger Kombination für die Verwirklichung der Erfindung wesentlich sein.

### Bezugszeichenliste

- 1: Ionenaustauscheranlage
- 2: erstes Ein-/Ausströmende
- 3: zweites Ein-/Ausströmende
- 4: Zulauf
- 5: Ablauf
- 6: Kreuzung
- 7: Eingangsumschaltung
- 8: Ablaufkreuzung
- C₁-C₅: Säulen
- L: Anzahl von Säulen als Beladungs-Reihenschaltung
- P₁-P₃: Medienpfade
- R: Anzahl von Säulen für Regeneration
- W: Anzahl von Säulen für Wäsche
- Y₁₁₁-Y_{NNN}: Ventile
- Y_{R}: Richtungsventile

## Patentansprüche

1. Ionenaustauscheranlage (1) zur Verwendung in Ionenaustauschprozessen, insbesondere zum Ändern der stofflichen Zusammensetzung einer Lösung, mit einer Mehrzahl fluidisch durchströmbarer Säulen (C), wobei jede Säule ein erstes Ein-/Ausströmende (2) und ein zweites Ein-/Ausströmende (3) aufweist; und mit einer Mehrzahl Medienpfade (P), wobei jedes Ein-/Ausströmende (2, 3) mit zumindest zwei Medienpfaden (P) koppelbar ist;
wobei jeder Medienpfad (P) einen oder mehrere Zuläufe (4) aufweist und die Medienpfade (P) einen oder mehrere Abläufe (5) aufweisen,
**dadurch gekennzeichnet, dass** zwischen benachbarten Säulen (C) jeweils eine mittels vier über eine H-Verrohrung miteinander verbundenen Ventilen (Y_{X11}, Y_{X12}, Y_{X13}, Y_{X14}) realisierte Kreuzung (6) vorgesehen ist, mittels welcher eine beliebige Anzahl benachbarter Säulen (C) in Serie betreibbar ist, wobei mittels der Kreuzung (6) die ersten Ein-/Ausströmenden (2) und die zweiten Ein-/Ausströmenden (3) zweier benachbarter Säulen (C) zur Bereitstellung eines Fluidpfads beliebig untereinander koppelbar sind.

2. Ionenaustauscheranlage nach Anspruch 1, wobei jedes Ein-/Ausströmende (2, 3) mit jedem der Medienpfade (P) koppelbar ist.

3. Ionenaustauscheranlage nach Anspruch 1 oder 2, wobei die ersten Ein-/Ausströmenden (2) und die zweiten Ein-/Ausströmenden (3) jeweils über separate Rohrverbindungen mit zumindest zweien der Medienpfade (P), bevorzugt mit jedem der Medienpfade (P), verbunden sind und jeweils über separate Ventile (Y) mit diesen koppelbar sind.

4. Ionenaustauscheranlage (1) nach einem der vorangehenden Ansprüche, welche ferner eine Verriegelungsschaltung aufweist, welche verhindert, dass jede der Mehrzahl Säulen (C) von mehr als einem Pfad (P) gleichzeitig genutzt werden kann.

5. Ionenaustauscheranlage (1) nach einem der vorangehenden Ansprüche, welche ferner derart angesteuert ist, dass bei in Serie betriebenen Säulen (C) die dazwischen befindliche Kreuzung (6) nur von jeweils einem Medienpfad (P) gleichzeitig nutzbar ist.

6. Ionenaustauscheranlage (1) nach einem der vorangehenden Ansprüche, welche zwischen drei und fünf, vorzugsweise zwischen vier und fünf, fluidisch durchströmbare Säulen (C) aufweist.

7. Ionenaustauscheranlage (1) nach einem der vorangehenden Ansprüche, welche zumindest drei Medienpfade (P) aufweist.

8. Ionenaustauscheranlage (1) nach einem der vorangehenden Ansprüche, wobei zumindest einer der Zuläufe (4) der Medienpfade (P) eine Eingangsumschaltung (7) aufweist, so dass je Medienpfad (P) mit Eingangsumschaltung (7) eine Mehrzahl unterschiedlicher Medien separat oder in einem Mischverhältnis eingespeist werden kann.

9. Ionenaustauscheranlage (1) nach einem der vorangehenden Ansprüche, wobei jeder der Medienpfade (P) eine eigene Flusskontrolle aufweist, so dass alle Medienpfade (P) zeitlich parallel betrieben werden können.

10. Ionenaustauscheranlage (1) nach einem der vorangehenden Ansprüche, wobei die Mehrzahl Ventile (Y) als diskrete Ventile ausgebildet ist.

11. Ionenaustauscheranlage (1) nach einem der vorangehenden Ansprüche, wobei jeder der Medienpfade (P) in zwei unterschiedlichen Richtungen betreibbar ist, so dass jedes Medium im Auf- oder im Abstrom durch die Säulen (C) führbar ist.

12. Ionenaustauscheranlage (1) nach Anspruch 11, wobei an jeden Zulauf (4) und diesem nachgelagert sowie an jeden Ablauf (4) und diesem vorgelagert in entgegengesetzten Richtungen des jeweiligen Medienpfads jeweils zwei Richtungsventile (Y_{R}) angrenzen, über welche das jeweilige Medium in unterschiedlichen Strömungsrichtungen über den Medienpfad (P) führbar ist.

13. Ionenaustauscheranlage (1) nach einem der vorangehenden Ansprüche, welche derart ausgebildet ist, dass die Durchflussrate in jedem der Medienpfade (P) individuell einstellbar ist.

14. Ionenaustauscheranlage (1) nach einem der vorangehenden Ansprüche, wobei zwischen den Abläufen (5) ferner eine Ablaufkreuzung (8) vorgesehen ist, über welche die geführten Medien zwischen den Abläufen (5) zumindest teilweise transferierbar sind.

## Claims

1. Ion exchange apparatus (1) for use in ion exchange processes, in particular for changing the material composition of a solution,
having a plurality of columns (C) through which fluid can flow, each column having a first inflow/outflow end (2) and a second inflow/outflow end (3)
and with a plurality of media paths (P), wherein each inflow/outflow end (2, 3) can be coupled to at least two media paths (P);
wherein each media path (P) has one or more inlets (4) and the media paths (P) have one or more outlets (5),
**characterised in that** a crossing (6) is provided between adjacent columns (C), which crossing is implemented by means of four valves (YX11, YX12, YX13, YX14) connected to one another via H-piping and by means of which any number of adjacent columns (C) can be operated in series, wherein the first inflow/outflow ends (2) and the second inflow/outflow ends (3) of two neighbouring columns (C) can be coupled to one another in any desired manner by means of the intersection (6) to provide a fluid path.

2. The ion exchanger system according to claim 1, wherein each inflow/outflow end (2, 3) can be coupled to each of the media paths (P).

3. Ion exchanger system according to claim 1 or 2, wherein the first inflow/outflow ends (2) and the second inflow/outflow ends (3) are each connected via separate pipe connections to at least two of the media paths (P), preferably to each of the media paths (P), and can each be coupled to these via separate valves (Y).

4. Ion exchange apparatus (1) according to any one of the preceding claims, further comprising an interlock circuit which prevents each of the plurality of columns (C) from being utilised by more than one path (P) simultaneously.

5. Ion exchanger system (1) according to one of the preceding claims, which is furthermore controlled in such a way that, in the case of columns (C) operated in series, the intersection (6) located therebetween can only be utilised by one media path (P) at a time.

6. Ion exchanger system (1) according to one of the preceding claims, which has between three and five, preferably between four and five, columns (C) through which fluid can flow.

7. Ion exchanger system (1) according to one of the preceding claims, which has at least three media paths (P).

8. Ion exchanger system (1) according to one of the preceding claims, wherein at least one of the inlets (4) of the media paths (P) has an inlet selection (7), so that a plurality of different media can be fed in separately or in a mixing ratio for each media path (P) with inlet selection (7).

9. Ion exchanger system (1) according to one of the preceding claims, wherein each of the media paths (P) has its own flow control, so that all media paths (P) can be operated in parallel in terms of time.

10. Ion exchanger system (1) according to one of the preceding claims, wherein the plurality of valves (Y) is designed as discrete valves.

11. Ion exchanger system (1) according to one of the preceding claims, wherein each of the media paths (P) can be operated in two different directions, so that each medium can be guided through the columns (C) in the upstream or downstream direction.

12. Ion exchanger system (1) according to claim 11, wherein two directional valves (YR) are adjacent to each inlet (4) and downstream thereof as well as to each outlet (4) and upstream thereof in opposite directions of the respective media path, via which the respective medium can be guided in different flow directions via the media path (P).

13. Ion exchanger system (1) according to one of the preceding claims, which is designed in such a way that the flow rate in each of the media paths (P) is individually adjustable.

14. Ion exchanger system (1) according to one of the preceding claims, wherein an outlet crossing (8) is also provided between the outlets (5), via which the guided media can be at least partially transferred between the outlets (5).

## Revendications

1. Appareil d'échange d'ions (1) destiné à être utilisé dans les procédés d'échange d'ions, en particulier pour modifier la composition matérielle d'une solution,
comportant plusieurs colonnes (C) à travers lesquelles le fluide peut circuler, chaque colonne ayant une première extrémité d'entrée/sortie (2) et une deuxième extrémité d'entrée/sortie (3)
et avec une pluralité de voies de média (P), où chaque extrémité d'entrée/sortie (2, 3) peut être couplée à au moins deux voies de média (P) ;
où chaque chemin de média (P) a une ou plusieurs entrées (4) et les chemins de média (P) ont une ou plusieurs sorties (5),
**caractérisé en ce qu'**un croisement (6) est prévu entre des colonnes adjacentes (C), ce croisement étant réalisé au moyen de quatre vannes (YX11, YX12, YX13, YX14) reliées entre elles par une tuyauterie en H et au moyen desquelles un nombre quelconque de colonnes adjacentes (C) peuvent être exploitées en série, les premières extrémités d'entrée/sortie (2) et les secondes extrémités d'entrée/sortie (3) de deux colonnes voisines (C) pouvant être couplées l'une à l'autre de la manière souhaitée au moyen de l'intersection (6) pour fournir un chemin de fluide.

2. installation d'échange d'ions selon la revendication 1, dans laquelle chaque extrémité d'entrée/sortie (2, 3) peut être couplée à chacun des trajets de fluide (P).

3. installation d'échange d'ions selon la revendication 1 ou 2, dans laquelle les premières extrémités d'entrée/sortie (2) et les deuxièmes extrémités d'entrée/sortie (3) sont reliées chacune par des raccords de tuyaux séparés à au moins deux des voies de fluide (P), de préférence à chacune des voies de fluide (P), et peuvent être couplées chacune à celles-ci par des vannes séparées (Y).

4. Installation d'échange d'ions (1) selon l'une quelconque des revendications précédentes, qui comprend en outre un circuit de verrouillage qui empêche chacune des multiples colonnes (C) d'être utilisée par plus d'un chemin (P) à la fois.

5. Installation d'échange d'ions (1) selon l'une des revendications précédentes, qui est en outre commandée de telle sorte que, dans le cas de colonnes (C) fonctionnant en série, le croisement (6) se trouvant entre elles ne peut être utilisé que par un seul chemin de fluide (P) à la fois.

6. Installation d'échange d'ions (1) selon l'une des revendications précédentes, qui présente entre trois et cinq, de préférence entre quatre et cinq, colonnes (C) pouvant être traversées par un fluide.

7. Installation d'échange d'ions (1) selon l'une des revendications précédentes, qui présente au moins trois voies de fluide (P).

8. Installation d'échange d'ions (1) selon l'une des revendications précédentes, dans laquelle au moins l'une des entrées (4) des voies de fluide (P) présente une commutation d'entrée (7), de sorte que pour chaque voie de fluide (P) avec commutation d'entrée (7), une pluralité de fluides différents peuvent être alimentés séparément ou dans un rapport de mélange.

9. Installation d'échange d'ions (1) selon l'une des revendications précédentes, dans laquelle chacun des trajets de fluide (P) présente un contrôle de flux propre, de sorte que tous les trajets de fluide (P) peuvent être exploités en parallèle dans le temps.

10. Installation d'échange d'ions (1) selon l'une des revendications précédentes, dans laquelle la pluralité de vannes (Y) est conçue comme des vannes discrètes.

11. Installation d'échange d'ions (1) selon l'une des revendications précédentes, dans laquelle chacun des trajets de fluide (P) peut être exploité dans deux directions différentes, de sorte que chaque fluide peut être guidé en amont ou en aval à travers les colonnes (C).

12. Installation d'échange d'ions (1) selon la revendication 11, dans laquelle deux vannes directionnelles (YR) sont respectivement adjacentes à chaque arrivée (4) et en aval de celle-ci ainsi qu'à chaque sortie (4) et en amont de celle-ci dans des directions opposées du chemin de fluide respectif, par lesquelles le fluide respectif peut être guidé dans différentes directions d'écoulement sur le chemin de fluide (P).

13. Installation d'échange d'ions (1) selon l'une des revendications précédentes, qui est conçue de telle sorte que le débit dans chacun des trajets de fluide (P) est réglable individuellement.

14. Installation d'échange d'ions (1) selon l'une des revendications précédentes, dans laquelle il est en outre prévu entre les sorties (5) un croisement de sortie (8) par lequel les fluides guidés peuvent être transférés au moins partiellement entre les sorties (5).
